**Europäisches Patentamt**

**European Patent Office**

**Office européen des brevets**

(11) Publication number: **0 209 534**
**B1**

(12) EUROPEAN PATENT SPECIFICATION

(45) Date of publication of patent specification: **25.04.90**

(21) Application number: **86900150.3**

(22) Date of filing: **13.12.85**

(86) International application number:
**PCT/FI85/00101**

(87) International publication number:
**WO 86/03650 03.07.86 Gazette 86/14**

(51) Int. Cl.⁵: **A 01 G 23/00**

(54) **TREE HANDLING APPARATUS.**

(30) Priority: **14.12.84 FI 844948**

(43) Date of publication of application:
**28.01.87 Bulletin 87/05**

(45) Publication of the grant of the patent:
**25.04.90 Bulletin 90/17**

(84) Designated Contracting States:
**DE FR GB SE**

(56) References cited:
**US-A-34 619 28**
**US-A-35 752 22**
**US-A-41 612 00**
**US-A-42 101 83**

**Derwent's abtracts H 4065 K/22, SU 94645**
**Derwent's abstract K 0860 D/39, SU 793770**

(73) Proprietor: **NOKKA-FOREST OY**
**PL 4**
**SF-40951 Muurame (FI)**

(72) Inventor: **KATTUNEN, Veikko**
**Harustie 1 C 2**
**SF-80160 Joensuu 16 (FI)**

(74) Representative: **Säger, Manfred, Dipl.-Ing.**
**Säger & Partner Patentanwälte Postfach 81 08 09**
**D-8000 München (DE)**

Courier Press, Leamington Spa, England.

# Description

The present invention relates to a tree handling apparatus according to the first part of the claim.

When handling a felled tree as a whole trunk it is preferable that one end of the tree be free to rest on the ground with the other end e.g. in the gap of a lopping machine. Thus, the entire weight of a tree trunk cannot stress the machine or apparatus handling it.

As the tree handling element, e.g. the lopping mechanism of a tree handling apparatus is pulling a tree trunk therethrough, the orientation of a trunk, particularly its angle of inclination relative to the ground, tends to fluctuate depending on ground irregularities, the branches and the remaining trunk length. Accordingly, it is preferable that the tree handling element of such apparatus be able to adapt itself to the changes of direction of a tree to be handled. This is to avoid the unnecassarily great loads on the body of a tree handling apparatus, caused by fully supporting a tree trunk. At the same time, the work result, i.e. the lopping, will be improved with the tree finding its way more accurately through the lopping mechanism.

Free swaying of a tree trunk as it is being handled is in principle achieved in a quite simple manner e.g. by articulating the tree handling element of a tree handling apparatus relative to the body of such tree handling apparatus. On the other hand, however, the forces resulting from tree handling, e.g. from pulling the tree, bear upon this articulation or linkage, so it must be capable of withstanding considerable loading. Such a tree handling apparatus solving these problems is known (Derwent's H 4065 K/22 SU—946 458) if "fulcrum" interpreted as including a pivoting line.

According to the preferred embodiment of the invention, the linkage is provided by articulating the tree handling element relative to the body of a tree handling apparatus by means of link rods in a manner that the intersecting line of the planes extending through the pivot axles of said link rods intersects a tree to be handled substantially at a line of traction defined by the tree lopping and pulling equipment.

In this solution of the invention, the linkage allows the tree handling element to find its way freely to the direction of a tree. Neither do the forces caused by tree handling result in substantially undesired wrenching between the tree handling element and the body of a tree handling apparatus, since the forces caused by the pulling of a tree divide into said link rods as tensile and compressive forces without the effect that feeding forces would tend to alter the orientation of said tree handling element.

The invention will now be described in detail with reference made to the accompanying drawing, in which:

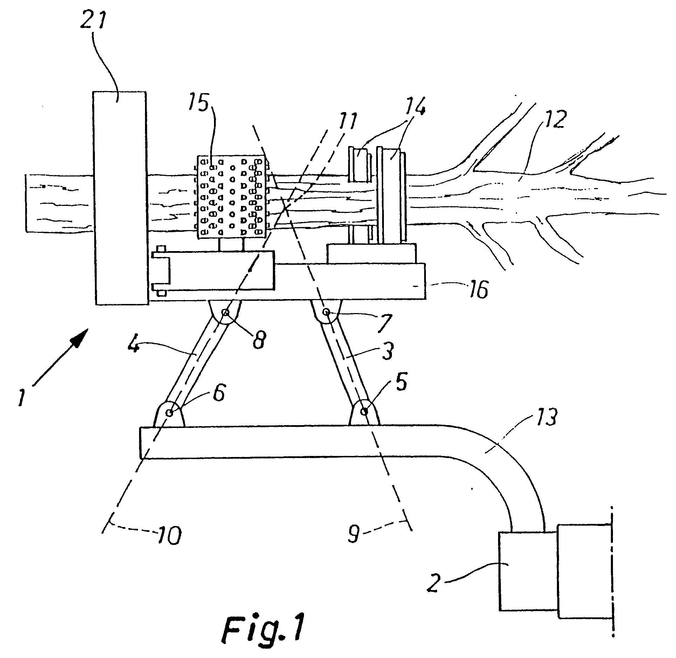

Fig. 1 is a diagrammatic side view of the tree handling element of a tree handling apparatus, depicting the articulated mounting of the tree handling element relative to the body of a tree handling apparatus.

Referring to fig. 1, the element generally designated by reference numeral 1 for handling a tree 12 comprises a lopping unit which is linked to the body 2 of a tree holding apparatus by means of a support arm 13. The body of a tree handling apparatus may be some working machine e.g. an agricultural tractor (not shown).

The lopping unit 1 comprises a base designated by reference numeral 16, to which are adjustably fastened lopping tools 14, surrounding a tree on either side thereof for effecting the lopping. The body 16 is also adjustably fitted with two drive gears 15 for squeezing a tree trunk therebetween and pulling it in axial direction, said lopping tools 14 cutting off the branches. A cut off unit 21 finally chops the tree into logs of desired length.

The articulation of said element 1 for handling a tree 12 relative to said body 2 of a tree handling apparatus is effected by means of link rods 3, 4, the lopping unit being able to adapt itself to the changes of direction of a tree being handled. Each link rod 3, 4 may comprise e.g. two parallel link rods fitted with common pivot axles or it may be a single wide link rod.

The positions and dimensioning of link rods 3, 4 are arranged in a manner that an intersecting line 11 of planes 9, 10 extending through pivot axles 5, 7; 6, 8 intersects a handled tree 12 essentially at a line of traction defined by the tree lopping and pulling equipment 14, 15. Thus, a force, parallel to the tree and caused by the feed-in of a tree 12 by means of drive gears 15, and the supporting forces transmitted by rods 3, 4, in the present case a compressive force in rod 3 and a tensile force in rod 4, intersect each other essentially at the same point 11 with the result that these forces do not tend to alter the direction of lopping unit 1.

The invention has only been described above with reference to the preferred embodiment thereof. Hence, for example, a line of traction defined by lopping and pulling equipment varies with varying tree diameters. Also minor deviations from the optimum intersection of axial planes or from the centre of the radius of curvature do not prevent utilization of the invention.

## Claim

A tree handling apparatus, wherein an element (1) for handling a tree (12) is articulated relative to the body (2) of said tree handling apparatus, whereby said element (1) for handling a tree (12) is pivotably supported in a manner that the fulcrum (11; 19) of said tree handling element (1) is positioned on a line of traction defined by equipment (14, 15) for lopping and pulling a tree (12), characterised in that said element (1) for handling a tree (12) is articulated relative to the body (2) of said tree handling apparatus by means of link rods (3, 4) in a manner that an intersecting line (11) of planes (9, 10) extending through link rod pivot axles (5, 7; 6, 8) intersects a handled tree (12) substantially at its centre axis.

**Patentanspruch**

Anordnung zum Behandeln von Bäumen, worin ein Element (1) zum Behandeln eines Baumes (12) bezüglich des Körpers (2) der Anordnung zum Behandeln von Bäumen angelenkt ist, wobei das besagte Element (1) zum Behandeln eines Baumes (12) schwenkbar in der Weise gestützt ist, daß der Drehpunkt (11, 19) des besagten Elements (1) zum Behandeln von Bäumen in einer Zuglinie angeordnet ist, die durch eine Ausrüstung (14, 15) zum Schneiden und Ziehen eines Baumes (12) begrenzt wird, dadurch gekennzeichnet, daß das Element (1) zum Behandeln eines Baumes (12) bezüglich des Körpers (2) der Anordnung zum Behandeln von Bäumen vermittels von Verbingsstäben (3, 4) in der Weise angelenkt ist, daß eine Schnittlinie (11) der Ebenen (9, 10), die sich durch die Schwenkachsen (5, 7; 6, 8) der Verbindungsstäbe gerstreckt, einen behandelten Baum (12) im wesentlichen in seiner Mittelachse schneidet.

**Revendication**

Appareil pour la manutention d'arbres, dans lequel un élément (1) pour manipuler un arbre (12) est articulé par rapport à le partie principale (2) dudit appareil de manutention des arbres, de sorte que ledit élément (1) pour la manutention d'un arbre (12) soit supporté en pivotement de manière que le pivot (11; 19) dudut élément de manutention des arbres (1) soit placé sur une ligne de traction définie par l'équipement (14, 15) pour élaguer et arracher un arbre (12), caractérisé par le fait que ledit élément (1) pour manipuler un abre (12) est articulé par rapport à la partie principale (2) dudit appareil de manutention des arbres grâce à des biellettes de liaison (3, 4) de telle sorte qu'une ligne d'intersection (11) des plans (9, 10) passant par les axes de pivotement des biellettes de liaison (5, 7; 6, 8) coupe un arbre manipuler (12) sensiblement sur son axe central.

Fig.1